# EUROPEAN PATENT APPLICATION

(11) **EP 2 071 534 A1**
(43) Date of publication of application: **17.06.2009**
(21) Application number: 08466030.7
(22) Date of filing: 26.11.2008
(51) Int. Cl.: G07F 19/00, G06Q 20/00, G06Q 30/00

(54) **Method for delivery of content to persons physically present in target area and device for delivery of content to persons physically present in target area**

(30) Priority: 12.12.2007 CZ 20070870
(71) Applicant: Baumann Technologie CZ, a.s., 66491 Ivancice (CZ)
(72) Inventor: Sellner, Michal, 66434 Kurim (CZ)
(74) Representative: Musil, Dobroslav

(57) **Abstract**

The invention relates to the method for delivery of content to persons (X) physically present in the target area, at which at first in the target area is automatically personified at least one person (X), who is automatically ranked into one of the target groups, after then based on the performed personification is selected at least one from the set of personified contents (advertisements /information) in electronic form and during the stay of a person (X) in the target area the selected content is displayed on the visual display device (2).

The invention also relates to the device for delivery of the content to persons (X) physically present in the target area, which comprises personification device of persons (X) physically present in the target area, while the personification device is coupled with the source (3) of video signal, which is coupled with at least one visual display device (2), which is assigned to the target area, at the same time the source (3) of video signal is coupled with memory means of personified content in electronic form.

## Description

### Technical field

The invention relates to the method for delivery of content to persons physically present in the target area.

The invention also relates to the device for delivery of content to persons physically present in the target area.

### Background art

At present for distributing advertisements/information besides the classic media like television, broadcasting, printed papers, also the new media like information displays in places of concentration of persons like waiting rooms, publicly accessible areas, commercial places, etc. are used. Method of information delivery utilising these new media and designated by the term "Digital Signage" is characteristic in that it is based on communication by means of a screen. This communication, as a rule is dynamic from the point of view of versatility of its content, which may be formed of graphics, video, information in the real time (weather, news, etc.) etc. Moreover, this communication may be both interactive and non-interactive, and as a rule it is controlled from one central control point.

"Digital Signage" is characterised in that its content whether it is any advertising content or general information (e.g. news, weather etc.) in most cases is an allover one and it covers all target groups of persons, thus also the persons to whom it should not act. Another feature of the present "Digital Signage" is that the contents are repeated in the loops.

The disadvantage of the "Digital Signage" is that viewing and acceptance of the particular content, e.g. the advertising spot or any general information by a person from the target group to whom the particular content is intended, is given more or less by a random occurrence of the person from the target group in the place of the performed communication and it is without any warranty.

The goal of the invention is to remedy or at least minimise the disadvantages of the present background art.

### Principle of the invention

The goal of the invention has been achieved through the method for delivery of content to persons physically present in the target area, whose principle consists in that at first in the target area is automatically personified at least one person, the person is automatically ranked into one of the target groups, after then based on the performed personification, at least one set of personified content is selected (advertisements/information) in electronic form and during the stay of a person in the target area is displayed on the visual display device.

Advantage of this solution consist in that it is possible based on information as to each person (customer) to target exactly the displayed content destined for a certain target group of recipients of the content (advertisement/information). Another advantage is that the system provides auditing information as to how many and what persons were in defined manner and certainly addressed by the content (advertisement/information). Further advantage is that at using the invention in self-service vending machine or similar device practically 100% persons using this vending machine will be hit in a target manner by the corresponding content (advertisement/information). Further advantage is in connection with the system of mobile payments, which complies with the legal rules especially in the sphere of handling with personal data, and which enable an exact identification of a particular person.

The invention also relates to the device for delivery of the content to persons physically present in the target area, whose principle consists in that it comprises a personification device of persons physically present in the target area, while this personification device is coupled with the source of video signal, which is coupled with at least one visual display device, which is assigned to the target area, at the same time the source of video signal is coupled with memory means of personified content in electronic form.

### Description of the drawings

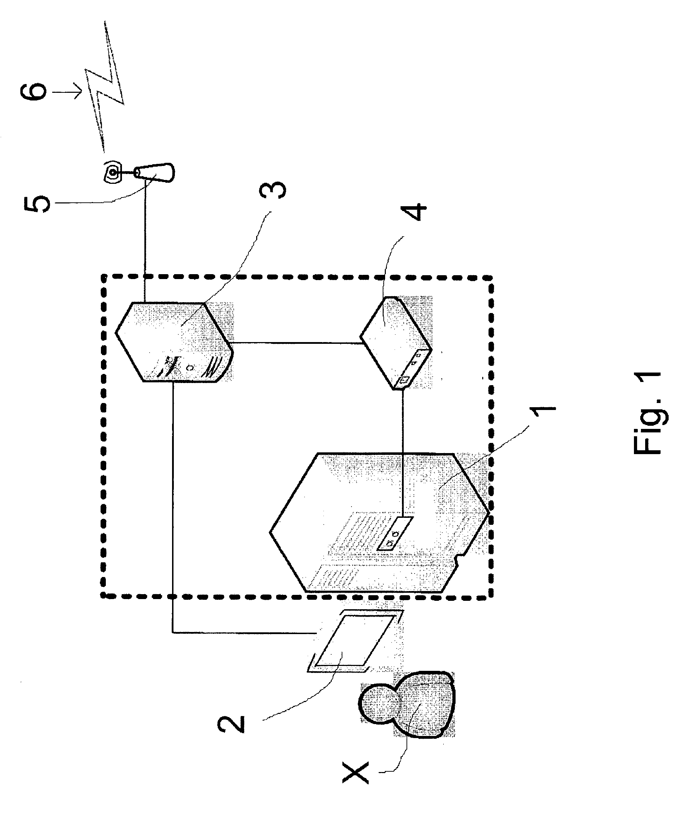

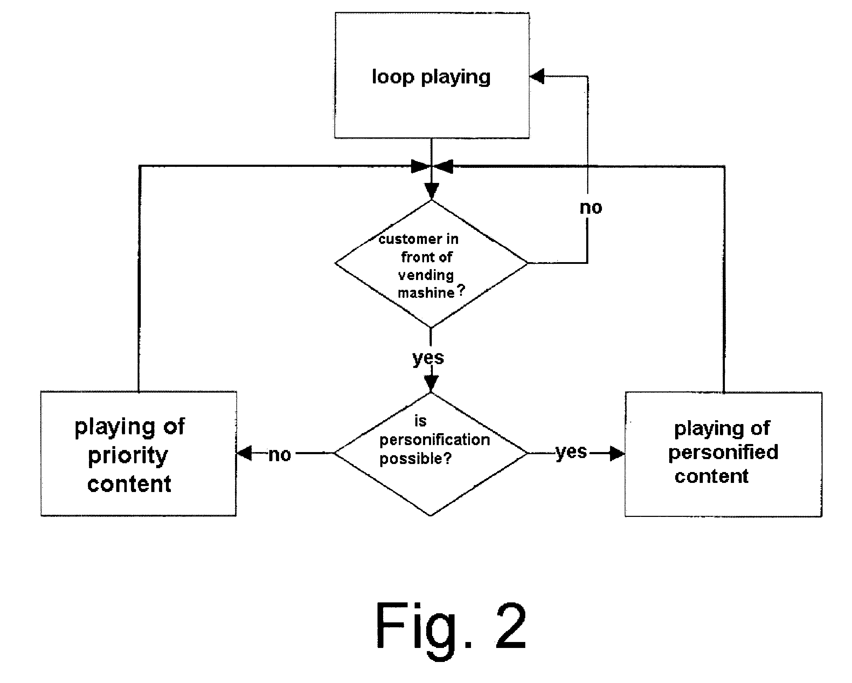

The invention is schematically represented in the drawing where Fig. 1 shows one of the possible exemplary embodiments of the invention and Fig. 2 flowdiagram describing example of invention functioning.

### Examples of embodiment

Method for delivery of content to persons **X** physically present in the target area will be described on an example, in which the target area in the meaning of this invention is formed by a space in front of the self-service vending machine **1,** hereinafter referred to as vending machine only, and/or the target area is formed by the surroundings of the vending machine **1.** The vending machine **1** is positioned on a more or less publicly accessible place and it is provided with the known means for self-service sale of goods and/or services.

To the vending machine **1** is assigned the visual display device **2**, e.g. the LCD monitor or any other displaying device. The visual display device **2** according to one example of embodiment is built-in into a body of the vending machine **1.** According to another advantageous embodiment the visual display device **2** is situated separately, nevertheless in vicinity of the vending machine **1.** The visual display device **2** is coupled with the source **3** of video signal, which may be created e.g. as a single purpose computer, as a universal computer of PC type, as any suitable video player etc. The source **3** of video signal is coupled with the evaluation unit **4** of personification device. The system formed by the visual display device **2** - the source **3** of video signal - the personification device is by means of the communication unit **5** via a suitable communication network **6**, e.g. the public communication network (telephone network, data network), coupled with the not represented central system.

The personification device is provided with means for evaluation of persons **X** for their immediate ranking into the target groups for displaying of personified content on the assigned visual display device **2**. The personification device according to one example of embodiment is coupled with control means of the vending machine **1.** In another example of embodiment the personification device is independent on control means of the vending machine **1.** In another not represented example of embodiment the personification device is coupled with control means of the vending machine **1**, and simultaneously it is provided with means being independent on control means of the vending machine **1.**

The personification device is provided with means to detect presence of persons **X** at the vending machine **1** or in its vicinity and further it is provided with means for personification of persons **X** first of all based on such features, as the kind of goods purchased, height of person **X,** shape of the figure, clothing and its colour, hair and its colour, the face, movement speed of body's parts, presence and type of mobile communication means kept by the person **X,** and further possible personification features, e.g. physical positioning of the vending machine **1** (railway station, institution, public space, etc.). Personification of persons **X** is performed e.g. optically, acoustically, through permitted communication with mobile device of the person **X,** evaluation of pressed button on the vending machine, whether the person **X** used the mobile payment or not, and if it is possible due to a legal rules, then it is possible to personify the person **X** also by using the scanner of fingerprint, by a visual identification of an image, etc.

Solution according to the invention works in that way, that if in the vicinity of the vending machine **1** no person **X** is present, the visual display device **2** displays a content, e.g. an advertisement or information or any local information from the sphere of positioning the vending machine **1** etc. in so called loop, i.e. repeatedly. Once any person **X** enters into the area of vending machine **1** e.g. approaches to the vending machine **1** or uses any from the control means of the vending machine **1**, e.g. presses the button, performs payment, performs noncash payment etc., the personification device evaluates the person **X,** personifies it by means of its input means, ranks it into one of the target groups, and based on such personification of a person the evaluation unit **4** or the source **3** of video signal or the central system selects from the set of personified content (advertisements/information) the most suitable content, which is to the person **X** immediately after then displayed by a source **3** of video signal **4** on the visual display device **2**. During waiting of the person **X** until the vending machine **1** completes releasing of the goods or services, while the person **X,** due to understandable reasons may not go too far from the vending machine **1** or from its vicinity, the personified content (advertisement/information) is displayed. At the same time the system records the data regarding the displayed content (advertisement/information) to the person **X,** so called auditing information. The data about number of individual displayed content (advertisement/information)are for a certain time period to the person **X** (e.g. once at a given time interval) transferred through the communication unit **5** via the communication network **6** into the central system for evaluation and possible charging to the submitter of the content (advertisement) information. The system may also work in such a manner, that if at the moment no person **X** is at the vending machine **1,** it may personify person **X** or persons **X** being present in vicinity of the vending machine **1** or passing the vending machine **1** and after then is displayed the personified content (advertisement/information) to those persons **X**.

Individual content (advertisement/information) intended for possible loop displaying and the individual content (advertisement/information) intended for personified displaying to persons **X** are stored in electronic form in suitable memory media, which is coupled with the source **3** of video signal, while it is possible to add, change, delete, etc. the content, either by a local manipulation in the place of the vending machine **1** or remotely from a central or other control system.

The invention is not limited only to the shown examples of embodiment in connection with self-service vending machine **1,** but it is with common skills adjustable or adaptable in principle to any target space, in which the persons **X** are physically present. In the same manner, within the common skill, it is possible to enhance the described example of embodiment from the solution providing the personified visual content to solution providing personified audiovisual content, namely by mere adding e.g. a loudspeaker and an audio track into the content (advertisement/information).

### Industrial applicability

The system is applicable especially for advertising industry and for targeted delivery of information.

### List of referential markings

- 1: vending machine
- 2: visual display device
- 3: source of video signal
- 4: evaluation unit of personification device
- 5: communication unit
- 6: communication network

## Claims

1. The method for delivery of content to persons physically present in the target area, **characterised in that** at first in the target area is automatically personified at least one person (X), the person is automatically ranked into one of the target groups, after then based on the performed personification is selected at least one from the set of personified content (advertisements /information) in electronic form and during the stay of a person (X) in the target area the selected content is displayed on the visual display device (2).

2. The method according to the claim 1**, characterised in that,** the data about number of individual content (advertisements/information) displayed to personified persons (X) in the target area are recorded.

3. The method according to any of the claim 1 or 2, **characterised in that** the target area is the space in front of and/or in vicinity of the self-service vending machine (1).

4. The device for delivery of the content to persons physically present in the target area, **characterised in that** it comprises a personification device of persons (X) physically present in the target area, while the personification device is coupled with the source (3) of video signal, which is coupled with at least one visual display device (2), which is assigned to the target area, at the same time the source (3) of video signal is coupled with memory means of personified content in electronic form.

5. The device according to the claim 4, **characterised in that** the personification device, the source (3) of video signal and at least one visual display device (2) are assigned to the self-service vending machine (1).

6. The device according to any of the claims 4 or 5, **characterised in that** the visual display device (2), the source (3) of video signal and the personification device are by means of the communication network (6) coupled with the central system.

7. The device according to any of the claims 4 to 6, **characterised in that** the visual display device (2) and/or source (3) of video signal and/or the personification device are coupled with means for collection of auditing information as to personified content displayed to the personified persons (X).
